Europäisches Patentamt

European Patent Office

Office européen des brevets

(11) Veröffentlichungsnummer: **0 088 915**
**B1**

(12) # EUROPÄISCHE PATENTSCHRIFT

(45) Veröffentlichungstag der Patentschrift:
13.08.86

(21) Anmeldenummer: 83101737.1

(22) Anmeldetag: 23.02.83

(51) Int. Cl.⁴: **A 01 B 63/112**

(54) **Hydraulische Steuereinrichtung zum Betätigen eines Hubwerks an einem landwirtschaftlichen Arbeitsfahrzeug.**

(30) Priorität: 15.03.82 DE 3209396

(43) Veröffentlichungstag der Anmeldung:
21.09.83 Patentblatt 83/38

(45) Bekanntmachung des Hinweises auf die Patenterteilung:
13.08.86 Patentblatt 86/33

(84) Benannte Vertragsstaaten:
DE FR GB IT

(56) Entgegenhaltungen:
GB-A-2 077 086
US-A-4 293 040

(73) Patentinhaber: ROBERT BOSCH GMBH, Postfach
50, D-7000 Stuttgart 1 (DE)

(72) Erfinder: Steprath, Werner, Ing.grad., Bergheimer
Strasse 42, D-4047 Dormagen 11 (DE)
Erfinder: Weigle, Dieter, Dipl.- Ing.,
Breitensteinstrasse 6, D-7432 Urach (DE)

## Beschreibung

### Stand der Technik

Die Erfindung geht aus von einer hydraulischen Steuereinrichtung zum Betätigen eines Hubwerks an einem landwirtschaftlichen Arbeitsfahrzeug nach der Gattung des Hauptanspruchs. Es ist schon eine solche Steuereinrichtung zur Regelung der Zugkraft in Unterlenkern eines Schlepperhubwerks aus der DE-OS 3 021 777 bekannt, wozu am Gehäuse des Schleppers starr ein Tragrahmen mit Biegestab befestigt ist. Die Durchbiegung des Biegestabes wird dabei als Regelgröße von einem Meßwertgeber erfaßt und einem Regelkreis zugeführt. Damit werden in vorteilhafter Weise Meßwert-Aufzeichnungssprünge infolge von Lagerspiel vermieden, die sonst bei Lastwechselns der zu messenden Zug- und Druckkräfte in den Unterlenkern auftreten können. Von Nachteil bei der Steuereinrichtung ist jedoch der hohe Bauaufwand für den starren Tragrahmen mit dem Biegestab. Zudem ist der für einen solchen Tragrahmen mit Biegestab notwendige Bauraum häufig bei Schleppern nicht vorhanden. Ferner kann das Herleiten der Regelgröße über die Verformung des Biegestabs nur aus einem Bruchteil der Kräfte in den Unterlenkern die Genauigkeit der Regelung nachteilig beeinflussen. Weiterhin kann die alleinige Anordnung des Meßwertaufnehmers an dem sich krümmenden Biegestab in der Praxis zu Schwierigkeiten führen, insbesondere für den Signalabgriff. Für manche Anwendungsfälle kann es ferner von Nachteil sein, daß bei dieser Steuereinrichtung der Biegestab nur die Summe der Unterlenkerkräfte erfassen kann.

Ferner ist aus der US-PS 4 085 806 eine hydraulische Steuereinrichtung zur Zugkraftregelung bei einem Schlepper bekannt, bei der die in einem Lenker herrschende Kraft über eine Torsionsfeder gemessen und in einen Weg umgewandelt wird, der dann über ein Regelgestänge zur Steuerung eines Wegeventils zur Verfügung steht. Von Nachteil bei dieser Steuereinrichtung ist der hohe Aufwand, vor allem hinsichtlich Platzbedarf und Material. Zudem eignet sich diese Ausbildung weniger für eine vollhydraulisch arbeitende Steuereinrichtung zur Hubwerksregelung. Zu dem arbeitet diese Steuereinrichtung mit einer relativ großen Hysterese.

Weiterhin ist aus der US-A-4 293 040 eine vollhydraulisch arbeitende Steuereinrichtung für die Hubwerksregelung an einem Traktor bekannt, welche die im Oberbegriff des Anspruchs 1 angegebenen Merkmale aufweist. Hier ist das biegeelastische Bauelement als rohrförmige Achse ausgebildet, die sich mit ihren beiden Enden im Traktorgehäuse abstützt und auf der jeweils zur Mitte hin beide Unterlenker gelagert sind. Im Innern der Achse ist als nicht den Biegekräften ausgesetztes Teil ein durchgehender starrer Stab mit einem zylindrischen Kolbenabschnitt in der Mitte zwischen beiden stirnseitigen Einspannstellen angeordnet, so daß Kolbenabschnitt und Achse-Innenwand einen Drosselquerschnitt eines hydromechanischen Wandlers bilden, dessen Durchflußwiderstand sich bei sich unter Last durchbiegen, der Achse ändert. Nachteilig bei dieser Lösung ist, daß der Wandler hier in der Mitte der durchgehenden Achse liegt und daher schwer zugänglich ist. Außerdem ist die konzentrische Lage des Kolbenabschnitts in der Achse bei derart langen Bauteilen nur schwer erreichbar, aber erforderlich, um bei auftretenden Zug- und Druckkräften und dementsprechender Auslenkung des biegeelastischen Bauelements nach entgegengesetzten Richtungen brauchbare Signale zu erreichen. Ferner ermöglicht eine derartige Laminardrossel infolge der für sie geltenden physikalischen Gesetze nur eine Verstellbarkeit von maximal 1 : 2,5, die im Vergleich zu turbulenten Drosseln relativ gering ist. Außerdem tritt bei dieser Lösung infolge axialer Auswanderbewegungen der Achse in den Lagerstellen Hysterese auf; zudem kann diese Lösung nur die Summe der Unterlenkerkräfte ermitteln.

### Vorteile der Erfindung

Die erfindungsgemäße Steuereinrichtung mit den kennzeichnenden Merkmalen des Hauptanspruchs hat demgegenüber den Vorteil, daß sie besonders einfach und robust baut, da der Wandler nun von außen leichter zugänglich ist. Dadurch begünstigt kann als Wandler eine voll zusteuerbare, also eine turbulente Drossel verwendet werden, deren Verstellbereich größer ist. Trotz kompakter und billiger Bauweise kann dabei der Wandler eine ausreichend hohe Leistung, Verstärkung und Genauigkeit erzielen. Auch der Ausbau eines Lenkers gestaltet sich leichter und hysteresearme Bauarten werden begünstigt. Zudem wird dadurch eine Einzelkraftmessung ermöglicht.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist eine Ausbildung gemäß Anspruch 3, was bei einfacher Bauweise einen relativ großen Hub im Bereich der Drosselstelle ermöglicht. Eine besonders einfache und mit geringem Aufwand auskommende Steuereinrichtung ergibt sich, wenn gemäß Anspruch 4 der ohnedies vorhandene Bolzen zur Lagerung des Lenkers als Teil des Wandlers und als Meßfeder verwendet wird. In weiterer Ausgestaltung gemäß Anspruch 5 kann der Wandler eine hohe Empfindlichkeit erreichen. Dabei läßt sich in weiterer Ausgestaltung gemäß Anspruch 9 durch eine Hubbegrenzung ein wirksamer Überlastschutz erreichen. Ferner ist es besonders vorteilhaft, wenn die Druckmittelanschlüsse auf einer Seite des Wandlers ausgebildet werden. Eine Ausbildung der Steuereinrichtung gemäß Anspruch 10 ist vor allem dann günstig, wenn in den Unterlenkern relativ große Kräfte auftreten. Umgekehrt kann bei kleineren Lenkerkräften das biegeelastische Bauelement aus einem anderen Stoff als Stahl hergestellt werden, z.B. aus einem glasfaserverstärkten Kunststoff oder aus Tombak, der eine ausreichend hohe Festigkeit aufweist, aber durch einen kleineren Elastizitäts-Modul eine größere Verformung erlaubt. Für Traktoren, die zur Anlenkung der Unterlenker eine durchgehende Achse im Gehäuse vorsehen, eignet sich besonders eine Ausbildung der Steuereinrichtung gemäß Anspruch 14. Weitere besonders vorteilhafte Ausgestaltungen ergeben sich aus den übrigen Ansprüchen, der Beschreibung sowie der Zeichnung.

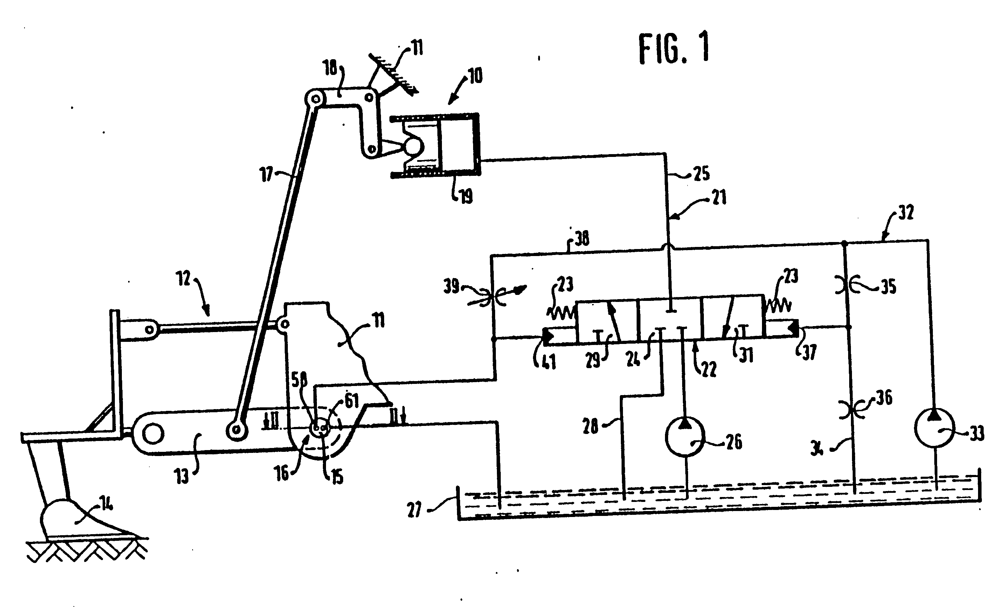

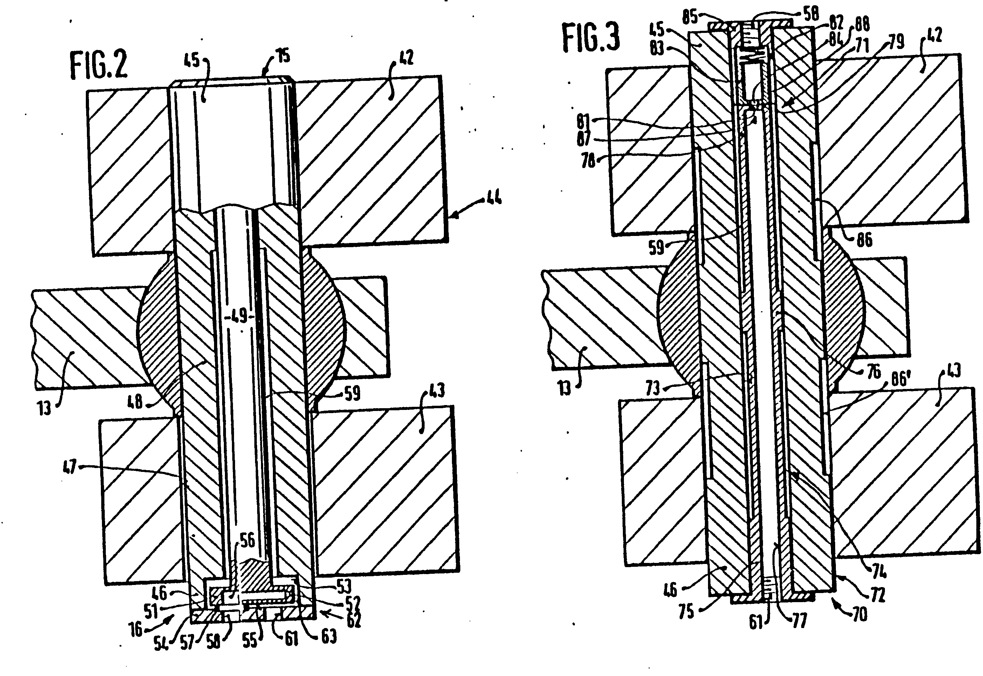

Ausführungsbeispiele der Erfindung sind in der Zeichnung dargestellt und in der nachfolgenden Beschreibung näher erläutert. Es zeigen Figur 1 eine hydraulische Steuereinrichtunk für eine Zugkraftregelung im Unterlenker eines Traktors in vereinfachter Darstellung, Figur 2 einen Längsschnitt durch den hydromechanischen Wandler nach Figur 1 und die Figuren 3 bis 5 Längsschnitte durch eine zweite, dritte und vierte Ausführungsform des hydromechanischen Wandlers.

## Beschreibung der Ausführungsbeispiele

Die Figur 1 zeigt einen Teil eines Traktors 10, an dessen Gehäuse 11 mit Hilfe eines üblichen Dreipunktgestänges 12 mit einem Unterlenker 13 ein Pflug 14 angelenkt ist. Der Unterlenker 13 ist mit Hilfe eines Bolzens 15 am Gehäuse 11 schwenkbar gelagert, wobei in dem Bolzen 15 zugleich ein hydromechanischer Wandler 16 integriert ist. Der Unterlenker 13 steht ferner über eine Hubstange 17 und einem gehäusefest gelagerten Hubarm 18 mit einem Kraftheber 19 in Wirkverbindung, vodurch der Pflug 14 heb- und senkbar ist. Zum Heben und Senken des Unterlenkers 13 ist der Kraftheber 19 in einen hydraulischen Arbeitskreis 21 geschaltet, zu dem ein Regelventil 22 zählt. Ein Steuerschieber des Regelventils 22 ist von Federn 23 in der gezeichneten Mittelstellung 24 zentriert, in welcher er eine zum Kraftheber 19 führende Arbeitsleitung 25 sowohl von einer Pumpe 26 als auch von einem zu einem Tank 27 führenden Rücklauf 28 trennt. Der hydraulisch auslenkbare Steuerschieber des Regelventils 22 kann eine Hebenstellung 29 einnehmen, in welcher er das von der Pumpe 26 geförderte Druckmittel zum Kraftheber 19 steuert. Ferner weist der Steuerschieber bei Auslenkungen in entgegengesetzter Richtung eine Senkenstellung 31 auf, in welcher er den Kraftheber 19 zum Rücklauf 28 entlastet. Zur hydraulischen Betätigung des Regelventils 22 ist auf dem Traktor 10 ferner ein hydraulischer Steuerkreis 32 vorgesehen, der hier als hydraulische Vollbrücke ausgebildet ist und von einer Steuerölpumpe 33 mit Druckmittel versorgt wird. In einem ersten Brückenzweig 34 dieser Vollbrücke liegen zwei feste Drosselstellen 35, 36, wobei der Zwischendruck zwischen diesen beiden Drosselstellen einem Steueranschluß 37 des Regelventils 22 eingegeben wird. Im anderen, zweiten Brückenzweig 38 liegen zwei verstellbare Drosselstellen 39 bzw. 16 zueinander in Reihe, wobei der Druck zwischen diesen beiden Verstell-Drosselstellen einem Steueranschluß 41 des Regelventiles eingegeben wird. Die Verstell-Drosselstelle 39 dient als Sollwertgeber des Regelkreises, während der hydromechanische Wandler 16 als Istwertgeber des Regelkreises dient.

Die Figur 2 zeigt einen Längsschnitt durch den Bolzen 15 nach Figur 1, in welchem der hydromechanische Wandler 16 integriert ist. Auf dem Bolzen 15 ist der Unterlenker 13 zwischen einem inneren Schenkel 42 und einem äußeren Schenkel 43 einer gehäusefesten gabelartigen Lakerstelle 44 schwenkbar gelagert. Der Bolzen 15 ist mit seinem innenliegenden Ende 45 im inneren Schenkel 42 fest eingespannt, während sein außenliegendes Ende 46 den äußeren Schenkel 43 mit radialem Spiel 47 durchdringt. Der Bolzen 15 weist als biegeelastisches Bauelement eine Hülse 48 auf, die in ihrem Innern als nicht biegeelastisches Teil einen raumfesten Stab 49 aufnimmt. Der Stab 49 ist mit seinem einen Ende im Bereich des inneren Schenkels 42 in der Hülse 48 fest eingespannt. An seinem freien Ende ist der Stab 49 tellerförmig zu einem Bund 51 erweitert, in dem eine Düse 52 angeordnet ist. Als der Düse 52 zugeordnete Prallplatte 53 dient die Innenwand der an dieser Stelle erweiterten Bohrung in der Hülse 48. Der Bund 51 weist eine einem Deckel 54 zugewandte, ebene Dichtfläche 55 auf, zu der hin ein mit der Düse 52 verbundener Kanal 56 sich öffnet. Der Kanal 56 im Bund 51 steht über einen Dichtring 57 mit einem im Deckel 54 angeordneten Einlaß 58 in Verbindung. Ein stromabwärts von der Düse 52 liegender Druckmittelraum 59, der von der Hülse 48, dem Stab 49 und dem Deckel 54 begrenzt wird, steht mit einem Auslaß 61 im Deckel 54 in Verbindung. Die Hülse 48 sowie der raumfeste Stab 49 bilden die beiden relativ zueinander beweglichen Teile des hydromechanischen Wandlers 16. Dabei besteht die als Federelement dienende Hülse 48 aus einem geeigneten Material, das neben hoher Festigkeit auch eine geeignete Elastizität aufweist, z.B. Stahl. Beide Anschlüsse 48, 61 für den Wandler 16 sind im Deckel 54 und somit auf derselben Stirnseite des Bolzens 15 ausgebildet, so daß der Wandler 16 relativ leicht in den zweiten Brückenzweig 38 geschaltet werden kann. Dabei wird der Einlaß 58 mit dem stromauf liegenden Abschnitt des zweiten Brückenzweiges 38 verbunden, während der Auslaß 61 mit dem zum Tank 27 führenden, stromabwärts liegenden Abschnitt verbunden ist.

Die Wirkungsweise der Steuereinrichtung zur Regelung der Zugkraft im Unterlenker 13 wird wie folgt erläutert, wobei auf Figur 1 und 2 Bezug genommen wird. Es sei davon ausgegangen, daß sich die Steuereinrichtung in einem eingeregelten Gleichgewichtszustand befindet, wobei die Steuerdrücke in den Steueranschlüssen 41 und 37 gleich groß sind und das Regelventil 22 die gezeichnete Mittelstellung 24 einnimmt, in der es den Kraftheber 19 hydraulisch blockiert. Die Größe der dabei im Unterlenker 13 herrschenden Zugkraft entspricht dem mit der Verstell-Drosselstelle 39 vorgegebenen Sollwert.

Übersteigt nun die Zugkraft im Unterlenker 13 den mit der Drosselstelle 39 vorgegebenen Sollwert, so wird die biegeelastische Hülse 48 noch stärker verformt, wobei sich die Prallplatte 53 noch weiter der Düse 52 am raumfesten Stab 49 nähert. Die von Düse 52 und Prallplatte 53 gebildete Drosselstelle 63 drosselt damit den Querschnitt noch stärker an, so daß sich der Zwischendruck im Steueranschluß 41 erhöht und der Schieber des Regelventils 22 in seine Hebenstellung 29 ausgelenkt wird. Nun wird Druckmittel von der Pumpe 26 über das Regelventil 22 in den Kraftheber 19 gesteuert, der über den Hubarm 18 und die Hubstange 17 den Unterlenker 13 anhebt und damit den Pflug 14 aus dem Erdreich heraushebt. Damit wird die Kraft im Unterlenker 13 kleiner und der Wandler öffnet seine Drosselstelle 63 wieder etwas weiter, so daß sich ein neuer Gleichgewichtszustand einstellt, bei dem die Kraft im Unterlenker 13 dem gewünschten Sollwert entspricht und die Lage des Pfluges 14 verändert ist.

Sinkt dagegen die Kraft im Unterlenker 13 unter den eingestellten Sollwert, so verringert sich auch die Durchbiegung der Hülse 48 und die Drosselstelle 62 im Wandler 16 steuert weiter auf, so daß der Zwischendruck im Steueranschluß 41 des Regelventils 22 fällt. Der von den Festdrosseln 35 und 36 bewirkte Zwischendruck im Steueranschluß 37 ist nun höher und schiebt das Regelventil in seine Senkenstellung 31, wodurch der Kraftheber 19 über das Regelventil 22 zum Tank 27 entlastet wird. Infolge seines Eigengewichts taucht der Pflug 14 tiefer in den Boden ein, wobei sich die Zugkraft im Unterlenker 13 wieder erhöht und der Wandler 16 seine Drosselstelle 62 verstärkt zusteuert. Mit zunehmenden Zwischendruck im Steueranschluß 41 wird schließlich wieder eine Gleichgewichtslage erreicht, bei der das Regelventil 22 seine Mittelstellung 24 einnimmt.

Bei dem als Wandler 16 ausgebildeten Bolzen 15 arbeitet die Hülse 48 als Biegestab, die in bezug auf ihre einseitige Einspannstelle wie ein Freiträger mit Verlängerung betrachtet werden kann. Dabei erstreckt sich die eigentliche Biegezone der Hülse 48 lediglich von der Einspannstelle im inneren Schenkel 42 bis zur Lagerstelle des Unterlenkers 13. Der übrige Abschnitt der Hülse 48 zwischen Unterlenker 13 und Deckel 54 unterliegt keiner Durchbiegung, sondern verstärkt entsprechend seiner Hebelübersetzung den Hub im Bereich der Drosselstelle 62. Durch diese Anordnung der Drosselstelle 62 in möglichst großer Entfernung von der Einspannstelle der Hülse 48 im inneren Schenkel 42 und von der Lagerstelle des Unterlenkers 13 werden in der Praxis brauchbare Hübe erreicht. Vorteilhaft ist ferner, daß durch die Ausbildung der Drosselstelle als Düsen-Prallplatten-Wandler auch relativ kleine Hübe verarbeitet werden können. Ferner lassen sich durch die gezeigte Ausbildung des Wandlers 16 die Anschlüsse für Einlaß und Auslaß in besonders zweckmäßiger Weise auf derselben Stirnseite des Bolzens 15 anordnen. Infolge der relativ niedrigen Drücke im Steuerkreis 32 und der verhältnismäßig kleinen Hübe ergibt der O-Ring 57 eine einfache und billige Abdichtung zwischen den zwei relativ zueinander beweglichen Teilen des Wandlers 16. Die Größe des Spiels 47 wird in vorteilhafter Weise so gewählt, daß der äußere Schenkel 43 als Anschlag für die sich unter Last durchbiegende Hülse 48 dient und somit ein Überlastschutz erreicht wird. Der Bolzen 15 wird im Traktorgehäuse 11 so eingebaut, daß die vom Unterlenker 13 verursachte Durchbiegung der Hülse 48 im wesentlichen in derselben Ebene liegt wie die Düse 52. Damit sich die Hülse 48 und der Stab 49 relativ ungestört zueinander bewegen können, erstreckt sich der Raum 59 bis zur Einspannstelle der Hülse 48 im inneren Schenkel 42. Selbstverständlich kann der Wandler 16 im Bolzen 15 sowohl Zugkräfte als auch Druckkräfte verarbeiten.

Die Figur 3 zeigt einen Längsschnitt durch eine andere Ausführungsform eines Bolzens 70 mit integriertem Wandler 71, der anstelle des Bolzens 15 nach Figur 1 verwendet werden kann. Der Bolzen 70 unterscheidet sich von demjenigen nach Figur 2 vor allem dadurch, daß er als ein auf beiden Seiten abgestützter Träger ausgebildet ist. Im übrigen sind gleiche Teile wie in Figur 2 auch mit gleichen Bezugszeichen versehen. Der Bolzen 70 weist nun als biegeelastisches Bauelement eine Hülse 72 auf, die als durchgehendes Rohr ausgebildet ist und mit ihren beiden Enden 45, 46 in den Schenkeln 42 bzw. 43 fest eingespannt ist. In eine Längsbohrung 73 der Hülse 72 ist nun als nicht biegeelastisches Element ein im wesentlichen rohrförmig ausgebildeter Stab 74 eingesetzt, dessen Außendurchmesser kleiner ist als der Durchmesser der Längsbohrung 73. Dieser Stab 74 ist lediglich im Bereich des äußeren Schenkels 43 mit Hilfe eines zylindrischen Abschnitts 75 sowie im Bereich der Lagerstelle des Unterlenkers 13 durch einen mittleren zylindrischen Abschnitt 76 in der Längsbohrung 73 zentrisch geführt. Ein zum Ablauf 61 führender Längskanal 77 im Stab 74 endet an einem freien Ende 76 des Stabes 74 in einem Planschieber 79 mit einer Drosselöffnung 81. Am Planschieber 79 liegt eine von einer Feder 82 belastete, becherförmige Hülse 83 an, die eine der Drosselöffnung 81 zugeordnete Offnung 84 aufweist. Die Hülse 83 selbst ist in einer Anschlußhülse 85 geführt, die in die Längsbohrung 73 des Bolzens 70 eingesetzt ist und den Einlaß 58 aufweist. Die Hülse 83 ist mit ausreichendem Spiel in der Anschlußhülse 85 geführt, so daß auch bei unter Last sich verformenden Bolzen 70 die Hülse 83 dichtend am Planschieber 79 anliegt. Um das Ausmaß der Durchbiegung des Bolzens 70 unter Last zu erhöhen, sind die freien Längen zwischen den Einspannstellen der Hülse 72 in den beiden Schenkeln 42 und 43 und im Unterlenker 13 durch ringnutartige Eindrehungen 86, 86' vergrößert. Die Drosselöffnung 81 im Planschieber 79 bildet mit der zugeordneten Öffnung 84 die verstellbare Drosselstelle 87 des Wandlers 71.

Die Wirkungsweise einer Steuereinrichtung mit Bolzen 70 nach Figur 3 gleicht insofern derjenigen nach Figur 1, als bei zunehmender Zugkraft im Unterlenker 13 die verstellbare Drosselstelle 87 zugesteuert wird, während sie bei nachlassender Zugkraft in entsprechend umgekehrter Weise die Drosselstelle 87 aufsteuert. Im Unterschied zum Bolzen nach Figur 2 wird jedoch der Bolzen 70 wie ein Träger auf zwei Stützen durchgebogen, da er in beiden Schenkeln 42 und 43 fest gelagert ist. Die unter Last am Unterlenker 13 auftretende Durchbiegung der Hülse 72 im Bereich des Unterlenkers 13 überträgt sich über den mittleren Abschnitt 76 auf den Stab 74, der lediglich mit seinem äußeren Abschnitt 75 fest eingespannt ist. Der Planschieber 79 am freien Stabende führt dementsprechend einen Hub aus, der über die verstellbare Drosselstelle 87 des Wandlers 71 zu einer Druckänderung im Eingang 58 führt. Der Abstand des Planschiebers 79 vom mittleren Abschnitt 76 wird möglichst groß gewählt, damit entsprechend der Hebelübersetzung die Durchbiegung im Bereich des Unterlenkers 13 in einen möglichst großen Hub am Planschieber 79 verstärkt wird. Einen möglichst großen Hub des Planschiebers 79 sollen auch die Eindrehungen 86, 86' am Außendurchmesser der Hülse 72 begünstigen, wodurch trotz kompakter Bauweise der Lagerung des Unterlenkers 13 der freie Abstand zwischen den Einspannstellen vergrößert wird. Im übrigen wird im Betrieb die Hülse 83 zusätzlich zur Kraft der Feder 82 durch das in den Einlaß 58 fließende Steueröl gegen den Planschieber 79 gedrückt, so daß eine Leckage von Druckmittel aus dem Raum 59 zwischen Hülse 83 und Planschieber 79 hindurch über die Drosselöffnung 81 zum Auslaß 61 vermieden wird. Der Raum 59 steht über Schlitze 88, die in der Anschlußhülse 85 angeordnet sind, mit dem Einlaß 58 in Verbindung. Die Ausbildung des Bolzens 70 als zweiseitig abgestützter Träger ist besonders dort vorteilhaft anwendbar, wo größere Kräfte im Unterlenker 13 auftreten. Umgekehrt kann bei kleineren Kräften im Unterlenker 13 die als Meßfeder dienende Hülse 72 auch aus einem anderen Material als Stahl hergestellt werden. Insbesondere käme dafür ein glasfaserverstärkter Kunststoff in Frage, der bei hoher Festigkeit einen kleineren Elastizitäts-Modul aufweist und damit größere Verformungen ermöglicht.

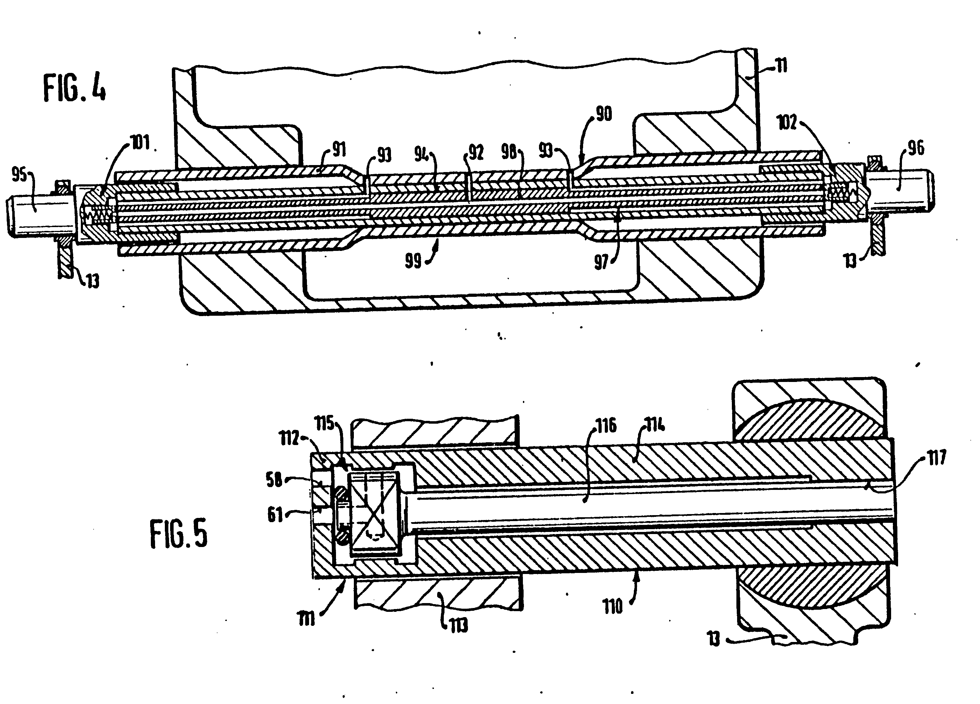

Die Figur 4 zeigt einen Teil einer dritten Ausführungsform der Steuereinrichtung im Längsschnitt, bei der die Unterlenker 13 im Traktorgehäuse 11 mit Hilfe einer durchgesteckten Achse 90 gelagert sind. Die Achse 90 weist ein im Gehäuse 11 befestigtes Außenrohr 91 auf, an dem die Anschlüsse für Einlaß 92 und Auslaß 93 herausgeführt sind. Mittig zwischen den beiden Befestigungen des Außenrohrs 91 im Gehäuse 11 ist als biegeelastisches Bauelement ein Biegerohr 94 fest im Außenrohr 91 eingespannt. Das Biegerohr 94 trägt an seinen äußeren Enden die Anlenkbolzen 95, 96 für die Unterlenker 13. Im Innern des Biegerohrs 94 ist als nicht biegeelastisches, raumfestes Element ein rohrförmiger Stab 97 mit einem verdickten, mittleren Abschnitt 98 eingespannt. Die beiden Enden des Stabes 97 bilden - in vergleichbarer Weise wie in Figur 3 - mit Hilfe von Planschiebern und in den Anlenkbolzen 95, 96 gelagerten Hülsen verstellbare Drosselstellen 101, 102 deren Widerstände sich proportional zu den in den Unterlenkern 13 herrschenden Kräfte sich verändern. Die beiden Drosselstellen 101, 102 sind dabei parallel zwischen den Einlaß 92 und Auslaß 93 keschaltet. Die Ausbildung gemäß Figur 4 eignet sich vor allem für solche Traktortypen, bei denen die Unterlenker auf durchgehenden Achsen gelagert sind. Ferner hat diese Bauart den Vorteil, daß das Biegerohr 94 zwischen Einspannstelle 99 und den Drosselstellen 101 bzw. 102 recht lang baut und damit relativ große Hübe erzielbar sind; somit kann das Biegerohr 94 vorzugsweise aus Stahl hergestellt werden.

Die Figur 5 zeigt als vierte Ausführungsform die Lagerung des Unterlenkers 13 mit Hilfe eines Bolzens 110 mit integriertem Wandler 111. Der Bolzen 110 ist als einseitig eingespannter Freiträger ausgebildet, indem er mit seiner das biegeelastische Bauelement bildenden Hülse 114 mit einem Ende 112 in einem am Gehäuse 11 befestigten Auge 113 eingespannt ist. Im Bereich dieser Einspannstelle am Ende 112 liegt zudem die verstellbare Drosselstelle 115, die vom freien Ende eines nicht den Biegekräften ausgesetzten Stabes 116 mit gebildet wird. Der Stab 116 ist im Bereich der Ebene des Unterlenkers 13 fest in der Hülse 114 eingespannt. Drosselstelle 115 und Einspannstelle 117 des Stabes 116 liegen möglichst weit auseinander, um einen möglichst großen Hub zu erreichen. Einlaß 58 und Auslaß 61 liegen auf derselben Stirnseite des Bolzens 110 und zudem in vorteilhafter Weise an dessem gehäusefesten Ende. Der Bolzen 110 ergibt zwar eine besonders einfach und kompakt bauende Anlenkung des Unterlenkers 13, jedoch erhält der Wandler 111 relativ kleine Eingangssignale. Vorteilhaft ist deshalb, die Hülse aus einem Material mit kleinerem Elastizitätsmodul als Stahl auszubilden, z.B. aus kohlefaser- oder glasfaserverstärktem Kunststoff, um die Durchbiegung und damit die Eingangssignale im Wandler zu erhöhen.

Selbstverständlich sind Änderungen an den gezeigten Ausführungsformen möglich, ohne vom Gedanken der Erfindung abzuweichen. Obwohl die Figur 1 die Steuereinrichtung lediglich mit einem Unterlenker 13 zeigt, ist es klar, daß sie auch für beide Unterlenker anwendbar ist. Für jeden Unterlenker kann dabei ein Bolzen 15 verwendet werden, die dann vorzugsweise parallel in den zugeordneten Brückenzweig geschaltet werden. Die aufgezeigte hydromechanische Kraftmessung ist nicht auf eine Anwendung bei Unterlenkern begrenzt, sondern kann auch bei Oberlenkern verwendet werden. Selbstverständlich kann auch die Brückenschaltung für den Steuerkreis 32 in anderer Weise aufgebaut und mit den hydromechanischen Wandlern verschaltet werden. Obwohl die Ausbildung nach Figur 2 mit einem Düsen-Prallplatten-Wandler als hydraulischer Widerstand besonders vorteilhaft ist, können an dessen Stelle auch andere hydraulische Widerstände treten. Der Düsen-Prallplatten-Widerstand nach Figur 2 kann auch bei einer Bauart des Bolzens nach Figur 3 eingesetzt werden. Die Ausbildung der Wandler als Bolzen gemäß Figur 2 und 3 in Verbindung mit der Hebelübersetzung, um die Durchbiegung in der Unterlenkerebene in einen verstärkten Hub an der Drosselstelle zu verwandeln, stellt eine besonders vorteilhafte Kombination dar. Der Wandler im Bolzen kann auch so ausgebildet werden, daß seine Drosselstelle mit zunehmender Last aufsteuert.

**Patentansprüche**

1. Hydraulische Steuereinrichtung zum Betätigen eines Hubwerks (12) an einem landwirtschaftlichen Arbeitsfahrzeug, insbesondere einem Traktor, mit einer hydraulischen Einrichtung aus wenigstens einer Druckmittelquelle (26) und einem Wegeventil (22) zur Steuerung eines hydraulischen Motors (19), mit dem wenigstens ein am Fahrzeug angelenkter Lenker (13) heb- und senkbar ist, wobei die vom Lenker (13) in das Fahrzeuggehäuse übertragenen Kräfte wenigstens teilsweise über ein biegeelastisches Bauelement (48; 72; 94; 114) übertragen werden, dessen Durchbiegung von einem hydromechanischen, zwei relativ zueinander bewegliche Teile (48, 49; 72, 74; 94, 97; 114, 116) aufweisenden Wandler (16; 71; 111) als Regelgröße für einen Regelkreis benützt wird, in dem ein den Wandler aufnehmender hydraulischer Steuerkreis (32) das Wegeventil (22) vorsteuert, wobei das biegeelastische Bauelement (48; 72; 94; 114) unmittelbar als eines der den Druckmittelstrom durch den Wandler (16; 71; 111) beeinflussenden, relativ zueinander beweglichen Teile (48, 49; 72, 74; 94, 97; 114, 116) ausgebildet ist, hohl baut und in seinem Inneren das nicht den Biegekräften ausgesetzte, andere Teil (49; 74; 97; 116) des Wandlers (16; 71; 111) aufnimmt, das an mindestens einer Stelle (45; 75; 98; 117) fest mit dem biegeelastischen Bauelement (48; 72; 94; 114) verbunden ist, dadurch gekennzeichnet, daß das nicht den Biegekräften ausgesetzte, andere Teil (49; 74, 97; 116) des Wandlers (16; 71; 111) an seinem von dieser Stelle (45; 75; 98; 117) entfernt liegenden, freien Ende die verstellbare Drosselstelle (62; 87; 101, 102; 115) des Wandlers (16; 71; 111) bildet.

2. Steuereinrichtung nach Anspruch 1, dadurch gekennzeichnet, daß sich das biegeelastische Bauelement (48; 72; 94; 114) im wesentlichen konzentrisch zur Längsachse eines den Lenker (13) lagernden Anlenkbolzens (15; 70; 95; 110) erstreckt.

3. Steuereinrichtung nach Anspruch 1 oder 2, dadurch gekennzeichnet, daß das biegeelastische Bauelement (48; 94; 114) als einseitig eingespannter Freiträger ausgebildet ist.

4. Steuereinrichtung nach einem der Ansprüche 1 bis 3, mit mindestens einer am Fahrzeuggehäuse ausgebildeten gabelartigen Lagerung zwischen deren Schenkel ein Lenker mittels Bolzen gelagert ist, dadurch gekennzeichnet, daß der Bolzen (15; 70) den hydromechanischen Wandler (16; 71) bildet und er hydraulische Anschlüsse (58; 61) für Einlaß (58) und Auslaß (61) aufweist.

5. Steuereinrichtung nach Anspruch 4, dadurch gekennzeichnet, daß der Bolzen (15) als biegeelastisches Bauelement eine Hülse (48) aufweist, die mit ihrem einen Ende (45) fest in einem Schenkel (42) der Lagerstelle (44) eingespannt ist, während sie mit ihrem anderen Ende (46) den anderen Schenkel (43) mit radialem Spiel (47) durchdringt und in diesem Bereich die verstellbare Drosselstelle (62) des Wandlers (16) ausgebildet ist.

6. Steuereinrichtung nach Anspruch 5, dadurch gekennzeichnet, daß am freien Ende (51) des gehäusefesten, anderen Teils (49) eine Düse (52) radial angeordnet ist, deren Eingang mit dem Einlaß (58) des Bolzens (15) in Verbindung steht und deren zugeordnete Prallplatte (53) von der gegenüberliegenden Innenwand der Hülse (48) gebildet wird.

7. Steuereinrichtung nach Anspruch 5 oder 6, dadurch gekennzeichnet, daß der Abstand der verstellbaren Drosselstelle (62) von der Hinspannstelle des anderen Teils (49) größer ist als ihr Abstand vom Unterlenker (13), insbesondere daß die Drosselstelle (63) außerhalb des mit Spiel durchdrungenen Schenkels (43) liegt.

8. Steuereinrichtung nach einem der Ansprüche 5 bis 7, dadurch gekennzeichnet, daß das andere Teil (49) von einem stabförmigen, einseitig fest eingespannten Abschnitt in einen tellerförmig vergrößerten Bund (51) übergeht, der die Düse (52) aufweist und in einer ebenen Dichtfläche (55) eine Kanalöffnung (56) hat, die über Dichtmittel (57) mit dem Einlaß (58) verbunden ist.

9. Steuereinrichtung nach einem der Ansprüche 4 bis 8, dadurch gekennzeichnet, daß der den Bolzen (15) mit radialem Spiel umgreifende Schenkel (43) einen Anschlag für den unter Last sich durchbiegenden Bolzen bildet.

10. Steuereinrichtung nach einem der Ansprüche 1, 2 und 4, dadurch gekennzeichnet, daß der Bolzen (70) mit seiner biegeelastischen Hülse (72) in beiden Schenkeln (42, 43) der gehäusefesten Lagerstelle (44) abgestützt ist und das nicht biegeelastische, andere Teil (74) im Bereich eines Schenkels (43) und im Bereich des Unterlenkers (13) gelagert ist und mit seinem freien Ende (78) im Bereich des anderen Schenkels (42) die verstellbare Drosselstelle (87) bildet.

11. Steuereinrichtung nach Anspruch 10, dadurch gekennzeichnet, daß die Drosselstelle (87) aus einem stirnseitig am anderen Teil (74) ausgebildeten Planschieber (79) und einer zugeordneten, gehäusefesten Öffnung (84) besteht.

12. Steuereinrichtung nach einem der Ansprüche 10 und 11, dadurch gekennzeichnet, daß der andere Teil (74) einen Längskanal (77) aufnimmt und die Anschlüsse für Hinlaß (58) und Auslaß (61) auf einander gegenüberliegenden Stirnseiten des Bolzens (70) angeordnet sind.

13. Steuereinrichtung nach Anspruch 11, dadurch gekennzeichnet, daß die Öffnung (84) in einer axial federbelasteten Hülse (83) angeordnet ist, deren Bodenfläche am Planschieber (79) des anderen Teils (74) anliegt.

14. Steuereinrichtung nach einem der Ansprüche 1 bis 3, dadurch gekennzeichnet, daß das biegeelastische Bauelement als ein durchgehendes Biegerohr (94) ausgebildet ist, an dessen Enden die die Unterlenker (13) lagernden Anlenkbolzen (95, 96) befestigt sind und daß das Biegerohr (94) mittig zwischen den Unterlenkern (13) im Fahrzeuggehäuse (11, 91) fest eingespannt ist, wobei im Biegerohr (94) zugleich das gehäusefeste, andere Teil (97) mit eingespannt ist, daß das andere Teil (97) mit seinen freien Enden jeweils in die Anlenkbolzen (95, 96) ragt und dort die hydraulischen Drosselstellen (101, 102) bildet.

15. Steuereinrichtung nach Anspruch 14, dadurch gekennzeichnet, daß das andere Teil (97) rohrförmig ausgebildet ist und an seiner Einspannstelle (99) einen verdickten Abschnitt (98) aufweist.

16. Steuereinrichtung nach Anspruch 14, dadurch gekennzeichnet, daß beide Drosselstellen (101, 102) parallel geschaltet sind.

17. Steuereinrichtung nach einem der Ansprüche 1 bis 16, dadurch gekennzeichnet, daß der hydromechanische Wandler (16; 71; 111) in einem als hydraulische Brückenschaltung ausgebildeten Steuerkreis (32) liegt.

18. Steuereinrichtung nach einem der Ansprüche 1 bis 3, mit einem mittels Bolzen (110) ineinem gehäusefesten Auge (113) gelagerten Lenker (13), dadurch gekennzeichnet, daß der Bolzen (110) den hydraulischen Wandler (111) bildet und als biegeelastisches Bauelement eine Hülse (114) aufweist, die mit ihrem einen Ende (112) im Auge (113) fest eingespannt ist und auf derem freien Ende der Lenker (13) gelagert ist, daß im freien Ende ein Stab (116) eingespannt ist, dessen freies Ende die Drosselstelle (115) des Wandlers (111) im Bereich des Endes (112) der Hülse (114) bildet.

19. Steuereinrichtung nach einem der Ansprüche 4 bis 13 und 18, dadurch gekennzeichnet, daß die beiden Anschlüsse (58, 61) an demselben Ende des Bolzens (110; 15) ausgebildet sind.

20. Steuereinrichtung nach einem der Ansprüche 1 bis 13 und 16 bis 19, dadurch gekennzeichnet, daß der Bolzen aus einem Material hoher Festigkeit und mit wesentlich kleinerem Elastizitätsmodul als Stahl besteht, insbesondere aus faserverstärktem Kunststoff, aus Nickellegierung oder aus Bronze.

## Claims

1. Hydraulic control device for the actuation of a lifting gear (12) on an agricultural working vehicle, in particular a tractor, with an hydraulic device comprising at least a pressure medium source (26) and a directional valve (22) for controlling an hydraulic motor (19), with which at least one control arm (13) articulated on the vehicle is raisable and lowerable, the forces transferred by the control arm (13) into the vehicle housing being at least partially transferred via a flexurely resilient component (48; 72; 94; 114), the flexure of which is used by an hydromechanical transducer (16; 71; 111), having two parts movable relative to each other (48, 49; 72, 74; 94, 97; 114, 116), as a controlled variable for a closed-loop control circuit, in which an hydraulic control circuit (32) accommodating the tranducer pilot-controls the directional valve (22), the flexurely resilient component (48; 72; 94; 114) being designed directly as one of the parts movable relative to each other (48, 49; 72, 74; 94, 97; 114, 116), influencing the pressure medium flow through the transducer (16; 71; 111), is of hollow construction and accommodates inside it the other part (49; 74; 97; 116) of the transducer (16; 71; 111) which is not exposed to the flexural forces and which is firmly connected to the flexurely resilient component (48; 72; 94; 174) at at least one point (45; 75; 98; 117), characterised in that the other part (49; 74, 97; 116) of the transducer (16; 71; 111) not exposed to the flexural forces forms the adjustable throttle point (62; 87; 101, 102; 115) of the transducer (16; 71; 111).

2. Control device according to Claim 1, characterised in that the flexurely resilient component (48; 72; 94; 114) extends substantially concentrically to the longitudinal axis of a knuckle pin (15; 70; 95; 110) bearing the control arm (13).

3. Control device according to Claim 1 or 2, characterised in that the flexurely resilient component (48; 94; 114) is designed as a cantilever clamped at one end.

4. Control device according to one of Claims 1 to 3, with at least one fork-like bearing designed on the vehicle housing, between the limbs of which bearing a control arm is borne by means of a pin, characterised in that the pin (15; 70) forms the hydromechanical transducer (16; 71) and has hydraulic connections (58; 61) for inlet (58) and outlet (61).

5. Control device according to Claim 4, characterised in that the pin (15) has as flexurely resilient component a sleeve (48) which is clamped by its one end (45) firmly in one limb (42) of the bearing point (44), while it passes by its other end (46) through the other limb (43) with radial play (47) and, in this region, the adjustable throttle point (62) of the transducer (16) is made.

6. Control device according to Claim 5, characterised in that a nozzle (52) is radially arranged at the free end (51) of the other part (49), fixed to the housing, the input of which nozzle is in connection with the inlet (58) of the pin (15) and the assigned baffle plate (53) of which nozzle is formed by the opposite inside wall of the sleeve (48).

7. Control device according to Claim 5 or 6, characterised in that the distance of the adjustable throttle point (62) from the clamping point of the other part (49) is greater than its distance from the lower control arm (13), in particular in that the throttle point (63) lies outside the limb (43) through which the pin passes with play.

8. Control device according to one of Claims 5 to 7, characterised in that the other part (49) goes from a rod-shaped section firmly clamped at one end over into a plate-shape enlarged collar (51), which has the nozzle (52) and, in a level sealing surface (55) a channel opening (56), which is connected to the inlet (58) via a sealing means (57).

9. Control device according to one of Claims 4 to 8, characterised in that the limb (43) engaging around the pin (15) with radial play forms a stop for the pin flexing under load.

10. Control device according to one of Claims 1, 2 and 4, characterised in that the pin (70) is supported by its flexurely resilient sleeve (72) in both limbs (42, 43) of the bearing point (44) which is fixed to the housing and the non flexurely resilient, other part (74) is borne in the region of one limb (43) and in the region of the lower control arm (13) and forms by its free end (78) in the region of the other limb (42) the adjustable throttle point (87).

11. Control device according to Claim 10, characterised in that the throttle point (87) consists of a cross-slide (79) designed at the face end on the other part (74), and an assigned opening (84), fixed to the housing.

12. Control device according to one of Claims 10 and 11, characterised in that the other part (74) accommodates a longitudinal channel (77) and the connections for inlet (58) and outlet (61) are arranged on opposing faces of the pin (70).

13. Control device according to Claim 11, characterised in that the opening (84) is arranged in an axially spring-loaded sleeve (83), the bottom surface of which rests against the cross-slide (79) of the other part (74).

14. Control device according to one of Claims 1 to 3, characterised in that the flexurely resilient component is designed as a continuous torsion tube (94) at the ands of which the knuckle pins (95, 96) bearing the lower control arms (13) are secured and in that the torsion tube (94) is firmly clamped centrally between the lower control arms (13) in the vehicle housing (11, 91), the other part (97), fixed to the housing, being clamped at the same time in the torsion tube (94), and in that the other part (97) protrudes by its free ends in each case into the knuckle pins (95, 96) and forms there the hydraulic throttle points (101, 102).

15. Control device according to Claim 14, characterised in that the other part (97) is of tubular design and has at its clamping point (99) a thickened section (98).

16. Control device according to Claim 14, characterised in that the two throttle points (101, 102) are connected in parallel.

17. Control device according to one of Claims 1 to 16, characterised in that the hydromechanical transducer (16; 71; 111) lies in a control circuit (32) designed as an hydraulic bridge circuit.

18. Control device according to one of Claims 1 to 3, with a control arm (13) borne by means of a pin (110) in an eye (113) fixed to the housing, characterised in that the pin (110) forms the hydraulic transducer (111) and has as flexurely resilient component a sleeve (114) which is firmly clamped by its one end (112) in the eye (113) and on the free end of which the control arm (13) is borne, and in that in the free end a rod (116) is clamped, the free end of which forms the throttle point (115) of the transducer (111) in the region of the end (112) of the sleeve (114).

19. Control device according to one of Claims 4 to 13 and 18, characterised in that the two connections (58, 61) are designed at the same end of the pin (110; 15).

20. Control device according to one of Claims 1 to 13 and 16 to 19, characterised in that the pin consists of a material of high strength and having a substantially smaller modulus of elasticity than steel, in particular of fibre-reinforced plastic, of nickel alloy or of bronze.

**Revendications**

1.- Dispositif hydraulique de commande pour actionner un mécanisme de levage (12) sur un véhicule agricole, notamnent sur un tracteur, avec un dispositif hydraulique constitué d'au moins une source de fluide sous pression (26) et d'un distributeur (22) pour commander un moteur hydraulique (19), grâce auquel au moins un bras oscillant (13) articulé sur le véhicule peut être soulevé et abaissé, les efforts transmis par le bras oscillant (13) à la carrosserie du véhicule, étant transmis au moine partiellement par l'intermédiaire d'un élément constitutif présentant une élasticité à la flexion (48; 72; 94; 114), et dont le fléchissement est utilisé par un convertisseur hydromécanique (16; 71; 111) conportant deux parties mobiles l'une par rapport à l'autre (48, 49; 72, 74; 94, 97; 114, 116), comme grandeurs de réglage pour un circuit de réglage dans lequel un circuit hydraulique de commande (32), captant le convertisseur, pilote le distributeur (22), l'élément constitutif présentant une élasticité à la flexion (48; 72; 94; 114) constituant directement une des parties mobiles l'une par rapport à l'autre (48, 49; 72, 74; 94, 97; 114, 116) qui influence l'écoulement du fluide sous pression à travers le convertisseur (16; 71; 111), cet élément constitutif étant creux et recevant dans son intérieur l'autre partie (49; 74; 97; 116), non exposée aux efforts de fléchissement, du convertisseur (16; 71; 111) et qui est au moins en un point (45; 75; 98; 117) solidaire de l'élément constitutif (48; 72; 94; 114) présentant une élasticité à la flexion, dispositif hydraulique de commande caractérisé en ce que l'autre partie (49; 74; 97; 118), non exposée aux efforts de fléchissament, du convertisseur (16; 71; 111) constitue à son extrémité libre éloignée de ce point (45; 75; 98; 117) le point d'étranglement réglable (62; 87; 101; 102; 115) du convertissaur (16; 71; 111).

2.- Dispositif de commande selon la revendication 1, caractérisé en ce que l'élément constitutif présentant une élasticité à la flexion (48; 72; 94; 114) s'étend en pratique concentriquement à un axe d'articulation (15; 70; 95; 110) supportant le bras oscillant (13).

3.- Dispositif de commande selon la revendication 1 ou 2, caractérisé en ce que l'élément constitutif présentant une élasticité à la flexion (48; 94; 114) revêt la forme d'un support libre bridé d'un côté.

4.- Dispositif de commande selon une des revendications 1 à 3 avec au moins un support en forme de fourche prévu sur la carrosserie du véhicule, support entre les branches duquel un levier oscillant est monté au moyen d'un axe, dispositif caractérisé en ce que l'axe (15; 70) constitue le convertisseur hydromécanique (16; 71) et comporte des raccordements hydrauliques (58; 61) pour l'admission (58) et l'échappement (61).

5.- Dispositif de commande selon la revendication 4, caractérisé en ce que l'axe (15) comporte comme élément constitutif présentant une élasticité à la flexion, une douille (48) dont une extrémité (45) est fermement bridée dans une branche (42) du support (44), tandis que son autre extrémité (46) traverse avec un jeu radial (47) l'autre branche (43) et que dans cette zone, est ménagé le point d'étranglement réglable (62) du convertisseur (16).

6.- Dispositif de commande selon la revendication 5, caractérisé en ce qu'à l'extrémité libre (51) de l'autre partie (49) solidaire du boîtier, est disposée radialement une buse (52) dont l'entrée est en communication avec l'admission (58) de l'axe (15), et dont la plaque d'impact associée (53) est constituée par la paroi interne opposée de la douille (48).

7.- Dispositif de commande selon la revendication 5 ou 6, caractérisé en ce que la distance du point d'étranglement réglable (62) de l'emplacement de bridage de l'autre partie (49) est supérieure à sa distance du bras oscillant (13), et notamment le point d'étranglement (63) se situe à l'extérieur de la branche (43) traversée avec du jeu.

8.- Dispositif de commande selon une des revendications 5 et 7, caractérisé en ce que l'autre partie (49); à partir d'un tronçon en forme de barreau fermement bridé d'un côté, se transforme en une collerette (51) agrandie en forme d'assiette, qui comporte la buse (52) et qui a, sur une surface d'étanchement plane (55) un orifice de canal (56) qui est relié par des moyens d'étanchement (57) à l'admission (58).

9.- Dispositif de commande selon une des revendications 4 à 8, caractérisé en ce que la branche (43) entourant avec un jeu radial l'axe (15) constitue une butée pour l'axe fléchissant sous charge.

10.- Dispositif de commande selon une das revendications 1, 2 et 4, caractérisé en ce que l'axe (70) avec sa douille (72) présentant une élasticité à la flexion; prend appui sur les deux branches (42, 43) du support (44) solidaire du boîtier, tandis que l'autre partie (74) ne présentant pas d'élasticité à la flexion, est montée dans la zone d'une branche (43) et dans la zone du bras oscillant (13), et constitue par son autre extrémité libre (78), dans la zone de l'autre branche (42), le point d'étranglemant réglable (87).

11.- Dispositif de commande selon la revendication 10, caractérisé en ce que le point d'étranglemant (87) est constitué par un tiroir plan (79) prévu frontalement sur l'autre partie (74), et par un orifice (84) solidaire du boîtier at associé à ce tiroir plan.

12.- Dispositif de commande selon une des revendications 10 et 11, caractérisé en ce que l'autre partie (74) contient un canal longitudinal (77), tandis que les raccordements pour l'admission (58) et l'échappement (61) sont disposés sur les faces frontales opposées de l'axe (70).

13.- Dispositif de commande selon la revendication 11, caractérisé en ce que l'orifice (84) est prévu dans une douille (83) sollicitée axialement par un ressort, et dont la surface du fond s'applique contre le tiroir plan (79) de l'autre partie (74).

14.- Dispositif de commande selon une des revendications 1 à 3, caractérisé en ce que l'élément constitutif présentant une élasticité à la flexion est réalisé sous la forme d'un tube fléchissant traversant (94) aux extrémités duquel sont fixés les axes d'articulation (95, 96) supportant le bras oscillant (13), tandis que le tube fléchissant (94) est fermement bridé dans le milieu entre les bras oscillants (13) sur la carrosserie (11, 91) du véhicule, l'autre partie (97) solidaire du boîtier, étant simultanément elle aussi bridée dans le tube fléchissant (14), les extrémités libres de cette autre partie (97) pénétrant respectivement dans les axes d'articulation (95, 96) où elles constituent les points d'étranglement hydraulique (101, 102).

15.- Dispositif de commande selon la revendication 14, caractérisé en ce que l'autre partie (97) est tubulaire et comporte à son emplacement de bridage (99) un tronçon plus épais (98).

16.- Dispositif de commande selon la revendication 14, caractérisé en ce que les deux points d'étranglement (101, 102) sont branchés en parallèle.

17.- Dispositif de commande selon une des revendications 1 à 16, caractérisé en ce que le convertisseur hydromécanique (16; 71; 111) est placé dans un circuit de commande revêtant la forme d'un branchement hydraulique en pont.

18.- Dispositif de commande selon une des revendications 1 à 3 avec un bras oscillant (13) monté au moyen d'un axe (110) dans un anneau (113) solidaire du boîtier, dispositif caractérisé en ce que l'axe (110) constitue le convertisseur hydraulique (111) et comporte comme élément constitutif présentant une élasticité à la flexion, une douille (114) dont une extrémité (112) est fermement bridée dans l'anneau (113), tandis que le bras oscillant (13) est monté sur l'extrémité libre de cette douille, un barreau (116) étant bridé dans cette extrémité libre, barreau dont l'extrémité libre constitue le point d'étranglement (115) du convertisseur (111) dans la zone de l'extrémité (112) de la douille (114).

19.- Dispositif de commande selon une des revendications 4 à 13 et 18, caractérisé en ce que les deux raccordements (58, 61) sont prévus à la même extrémité de l'axe (110; 15).

20.- Dispositif de commande selon une des revendications 1 à 13 et 16 à 19, caractérisé en ce que l'axe est constitué d'un matériau de haute résistance et ayant un module d'élasticité notablemant inférieur à celui de l'acier, notammant en une matière plastique renforcée par des fibres, en un alliage de nickel, ou bien en bronze.

FIG. 1

FIG.3

FIG.2

FIG.4

FIG.5

0 088 915